# EUROPÄISCHE PATENTANMELDUNG

(11) **EP 4 814 993 A1**
(43) Veröffentlichungstag der Anmeldung: **30.09.2026**
(21) Anmeldenummer: 26160928.3
(22) Anmeldetag: 26.02.2026
(51) Int. Cl.: H01B 13/012, B60R 16/02

(54) **MONTAGESTATION ZUM AUTOMATISCHEN MONTIEREN EINES VERBINDUNGSELEMENTS AN EINEM KABELSTRANG SOWIE VERFAHREN ZUM FERTIGEN EINES KABELBAUMS**

(30) Priorität: 17.03.2025 DE 102025110102
(71) Anmelder: Illinois Tool Works Inc., Glenview IL 60025 (US)
(72) Erfinder: VOLLMER, Gerit, Glenview, Illinois, 60025 (US); SANCHEZ BURGER, Sven, Glenview, Illinois, 60025 (US); BUHL, Peter, Glenview, Illinois, 60025 (US)
(74) Vertreter: Trinks, Ole

(57) **Zusammenfassung**

Die Erfindung betrifft eine Montagestation (1) eines Montagesystems zum Fertigen eines Kabelbaums für ein Fahrzeug, bei welchem eine Bündelung einzelner Leitungen zur Signal- und/oder Arbeitsstrom-Übertragung als Kabelstrang geführt und durch Verbindungselemente (20) zusammengehalten werden, wobei jedes Verbindungselement (20) einen Basisabschnitt (21), einen flexiblen Halteabschnitt (22) mit einem freien Ende und einem gegenüberliegenden, mit dem Basisabschnitt (21) verbundenen Ende und einen am oder beim Basisabschnitt (21) ausgebildeten Schlossabschnitt (23) mit einer Einführöffnung aufweist, über welche der Halteabschnitt (22) über sein freies Ende dem Schlossabschnitt (23) zuführbar ist. Die Montagestation (1) ist ausgebildet, in einer automatisierten ein Verbindungselement (20) an dem Kabelstrang zu montieren, und zwar indem der Halteabschnitt (22) des Verbindungselements (20) um den Kabelstrang gelegt und das freie Ende des Halteabschnitts (22) des Verbindungselements (20) über die Einführöffnung des Schlossabschnitts (23) in den Schlossabschnitt (23) des Verbindungselements (20) eingeführt wird.

## Beschreibung

Die vorliegende Erfindung betrifft allgemein das Gebiet der Herstellung eines Kabelsatzes oder Kabelbaums für ein Fahrzeug. Im weiteren Sinne betrifft die Erfindung insbesondere ein Konzept, mit welchem ein Kabelbaum bereitgestellt wird, wobei der Kabelbaum anschließend an einem Trägerbauteil einer Fahrzeugkarosserie eines Kraftfahrzeugs befestigt werden kann.

Kabelbäume kommen immer dann zum Einsatz, wenn eine komplexe Verkabelung mit mehreren Strängen notwendig ist. Allgemein soll unter den hierin verwendeten Begriffen "Kabelsatz" und "Kabelbaum" grundsätzlich eine Verbindung von mehreren einzelnen Kabeln oder Einzeladern verstanden werden, die in der Regel in einer bestimmten Geometrie, beispielsweise einer verästelten Baumgeometrie, angeordnet sind. Insbesondere ist ein Kabelbaum eine, oft konfektionierte, Bündelung einzelner Leitungen, die Signale (Information) oder Arbeitsströme (Energie) übertragen. Die Leitungen werden als Kabelbaum geführt und ummantelt oder durch Schellen, Kabelbinder, Bindegarn oder Schläuche zusammengehalten. Ein derartiger Kabelsatz findet insbesondere als vorgefertigtes Bauteil im Bereich der Fahrzeugindustrie verbreitet Einsatz und dient zur Versorgung von im Fahrzeug angeordneten elektrischen Komponenten mit elektrischer Energie.

Dabei ist für jeden Fahrzeugtyp mit unterschiedlicher Ausstattung in der Regel ein unterschiedlicher Kabelsatz bzw. Kabelbaum erforderlich. Jede elektrische Ausstattungsänderung zieht eine Veränderung am Kabelsatz nach sich.

Daher wird oftmals nur eine kleine Anzahl identischer Kabelsätze gefertigt. Teilweise sind die Kabelsätze sogar Einzelanfertigungen. Dies ist einer der Gründe dafür, dass die Kabelsätze im Wesentlichen manuell gefertigt werden. Hierzu ist auf einer als Kabelbrett ausgebildeten Montageunterlage bzw. Montage-Plattform die Geometrie des gewünschten Kabelsatzes abgebildet, beispielsweise durch aus der Montageunterlage hervorstehende Stifte, an denen die Kabel vorbeigelegt werden. Auf der Montageunterlage werden die Kabel einzeln manuell verlegt und zur Fixierung aneinander mit einem Fixierband manuell umwickelt oder durch Verbindungselemente, wie Kabelbinder, zusammengehalten.

Gerade im Automobilbereich werden derartige Kabelbäume häufig auch manuell mittels Kabelbindern mit einer Befestigungsvorrichtung verbunden, wobei diese Befestigungsvorrichtung dann anschließend beim Fahrzeughersteller mit einer Fahrzeugkarosserie verbunden wird, um den Kabelbaum zu fixieren.

Aufgrund der in der Regel manuellen Fertigung von Kabelbäumen sind besondere Qualitätssicherungsmaßnahmen erforderlich, um die gewünschte Funktion des jeweiligen Kabelbaums sicherzustellen. Insbesondere im sicherheitsrelevanten Bereich, wie der Bremssteuerung (Antiblockiersystem) oder der Ansteuerung eines Airbags, muss die Funktionssicherheit des Kabelbaums gewährleistet sein. Bisherige Versuche, diesen Prozess zu automatisieren, stießen auf Grenzen.

Vollautomatische Systeme wie Roboterzellen erfordern hohe Investitionen und sind unflexibel bei der Umrüstung auf neue Kabelbaumvarianten. Semi-automatische Werkzeuge existieren zwar, automatisieren jedoch meist nur das abschließende Spannen und Abschneiden des Kabelbinderbandes, nachdem der Bediener den aufwändigsten und ergonomisch anspruchsvollsten Schritt - das manuelle Einführen des Bandendes in den Verschlusskopf - bereits vollzogen hat.

Demnach liegt der Erfindung die Aufgabe zugrunde, ein System sowie ein Verfahren zum automatisierten Fertigen eines Kabelbaums für ein Fahrzeug anzugeben, bei welchem eine Bündelung einzelner Leitungen zur Signal- und/oder Arbeitsstrom-Übertragung als Kabelstrang geführt und durch Verbindungselemente zusammengehalten wird.

Eine weitere Aufgabe der vorliegenden Erfindung besteht darin, eine Lösung anzugeben, mit welcher eine einfache, schnelle und ergonomisch verbesserte Fertigung eines Kabelbaums bei gleichzeitig hoher Fertigungsqualität ermöglicht ist.

Diese Aufgabe wird insbesondere durch die Gegenstände der unabhängigen Patentansprüche gelöst.

Die erfindungsgemäße Montagestation ist grundsätzlich geeignet, in einer automatisierten Weise verschiedene Arten oder Typen von Befestigungselementen an dem Kabelstrang des zu fertigenden Kabelbaums zu montieren. Hierzu weist das zu montierende Verbindungselement vorzugsweise einen Basisabschnitt insbesondere zur Montage an einem Fahrzeugteil, einen flexiblen Halteabschnitt mit einem freien Ende und einem gegenüberliegenden, mit dem Basisabschnitt verbundenen Ende und einen am oder beim Basisabschnitt ausgebildeten Schlossabschnitt mit einer Einführöffnung auf, über welche der Halteabschnitt über sein freies Ende dem Schlossabschnitt zuführbar ist.

Die erfindungsgemäße Montagestation ist dabei ausgebildet, in einer automatisierten Weise das Verbindungselement an dem Kabelstrang zu montieren, und zwar indem der flexible Halteabschnitt des Verbindungselements zumindest teil- oder bereichsweise um den Kabelstrang gelegt und das freie Ende des Halteabschnitts des Verbindungselements über die Einführöffnung des Schlossabschnitts in den Schlossabschnitt des Verbindungselements eingeführt wird. Dies löst das Kernproblem des Standes der Technik, indem der manuelle und fehleranfällige Einführschritt vollständig automatisiert wird.

Bei einer vorteilhaften Realisierung der erfindungsgemäßen Montagestation weist diese eine erste Halterung zum bedarfsweisen Halten des Basisabschnitts und/oder des Schlossabschnitts des Verbindungselements und eine zweite Halterung zum bedarfsweisen Halten zumindest eines Bereiches des flexiblen Halteabschnitts auf.

Hierbei ist insbesondere vorgesehen, dass die zweite Halterung derart verschwenkbar ausgeführt ist, dass der von ihr gehaltene Bereich des flexiblen Halteabschnitts so umgelenkt wird, dass das freie Ende des Halteabschnitts in Richtung der Einführöffnung des Schlossabschnitts zeigt. Bei dieser Umsetzung weist die Montagestation ferner ein Führungselement auf, welches relativ zu der ersten Halterung bewegbar ist und das freie Ende des umgelegten Halteabschnitts durch die Einführöffnung in den Schlossabschnitt einführt.

Dieses Zusammenspiel der drei Kernelemente (erste Halterung, zweite Halterung, Führungselement) bildet eine robuste und prozesssichere mechanische Lösung.

Gemäß Realisierungen der Erfindung ist vorgesehen, dass die Montagestation ausgebildet ist, in einer synchronisierten Weise, sequenziell und gemäß einem vorab festgelegten oder festlegbaren Ereignisablauf und in einer automatisierten Weise zunächst den Halteabschnitt des Verbindungselements um den Kabelstrang herumzulegen und anschließend das freie Ende des Halteabschnitts über die Einführöffnung des Schlossabschnitts in den Schlossabschnitt einzuführen und durch diesen zu führen.

Diese Ausgestaltung stellt eine prozesssichere und wiederholgenaue Montage sicher. Durch den festgelegten, synchronisierten Ablauf wird die Fehleranfälligkeit durch menschliche Eingriffe minimiert und eine konstant hohe Montagequalität gewährleistet. Zudem ermöglicht der definierte Ereignisablauf eine exakte Taktzeitplanung und Optimierung des gesamten Fertigungsprozesses.

Ein wesentlicher Vorteil dieser Ausgestaltung liegt in der Prozesssicherheit und Rückverfolgbarkeit. Ein softwaregesteuerter, sequenzieller Ablauf ermöglicht die exakte Protokollierung jedes Einzelschrittes, was im Rahmen von Industrie-4.0-Konzepten für die Qualitätssicherung von entscheidender Bedeutung ist und die Fehlersuche bei Störungen drastisch vereinfacht.

Darüber hinaus bietet ein elektromagnetischer Aktuator gegenüber pneumatischen Alternativen eine überlegene Regelbarkeit von Geschwindigkeit und Kraft, was einen schonenderen Umgang mit den Bauteilen erlaubt und den Verschleiß minimiert. Alternativ zu einem elektromagnetischen Aktuator könnten auch pneumatische Zylinder für besonders hohe Kräfte oder Piezo-Aktoren für extrem schnelle und präzise Kleinbewegungen eingesetzt werden, je nach spezifischer Anforderung an den Montageprozess.

Gemäß einer bevorzugten Ausführungsform kann vorgesehen sein, dass der Montagestation mindestens ein Aktuator, insbesondere ein elektromagnetischer Aktuator, zugeordnet ist zum bedarfsweisen Antreiben der für die Montage des Verbindungselements an dem Kabelstrang notwendigen und antreibbaren mechanischen Komponenten.

Der Einsatz eines Aktuators ermöglicht die vollständige Automatisierung der mechanischen Bewegungen, was die körperliche Belastung für den Bediener erheblich reduziert und die Ergonomie am Arbeitsplatz verbessert. Ein elektromagnetischer Aktuator bietet dabei den Vorteil einer präzisen, schnellen und leisen Ansteuerung bei gleichzeitig kompakter Bauweise und geringem Energieverbrauch. Dies führt zu einer zuverlässigen und wartungsarmen Gerätelebensdauer.

Gemäß einer weiteren Ausführungsform ist vorgesehen, dass die Montagestation eine erste Halterung zum Halten des Basisabschnitts und/oder des Schlossabschnitts, eine zweite, verschwenkbare Halterung zum Halten des flexiblen Halteabschnitts und ein bewegbares Führungselement aufweist, welches das freie Ende des umgelenkten Halteabschnitts in den Schlossabschnitt einführt.

Diese mechanische Dreiteilung der Aufgaben (Fixieren, Schwenken, Einführen) auf spezialisierte Komponenten ermöglicht eine besonders robuste und funktionssichere Konstruktion. Jede Komponente kann optimal für ihre spezifische Funktion ausgelegt werden, was die Präzision des gesamten Vorgangs maximiert. Dieses Konzept stellt sicher, dass das flexible Bandende auch bei leichten Variationen des Verbindungselements oder des Kabelstrangs zuverlässig in die kleine Öffnung des Schlossabschnitts geführt wird.

Die Aufteilung der Funktionen auf drei separate, mechanisch entkoppelte Baugruppen erhöht die Modularität und Wartungsfreundlichkeit des Systems erheblich. So kann beispielsweise die erste Halterung als austauschbares Formnest konzipiert werden, um die Station mit minimalem Aufwand an verschiedene Typen von Verbindungselementen anzupassen, ohne die Schwenk- oder Vorschubmechanik ändern zu müssen.

Ein weiterer Vorteil ist die Robustheit, da jede Baugruppe optimal für ihre spezifische Belastung - statisches Halten, rotatorische Bewegung oder lineare Kraftübertragung - ausgelegt werden kann. Als Alternative zu diesem Drei-Komponenten-System wäre eine Lösung mit einem kleinen, mehrachsigen Knickarmroboter denkbar, welche jedoch mit deutlich höheren Kosten und komplexerer Steuerung verbunden wäre.

In einer alternativen Weiterentwicklung kann vorgesehen sein, dass die erste Halterung einen Aufnahmebereich aufweist, in oder von welchem zumindest teil- oder bereichsweise der Basisabschnitt und/oder der Schlossabschnitt des zu montierenden Verbindungselements aufnehmbar ist oder gehalten wird.

Ein definierter Aufnahmebereich erleichtert dem Bediener das Einlegen des Verbindungselements erheblich und stellt dessen exakte Positionierung und Ausrichtung sicher. Dies verhindert ein Verrutschen des Elements während des automatisierten Montagevorgangs, was für die Prozesssicherheit unerlässlich ist. Eine präzise Positionierung ist die Grundvoraussetzung dafür, dass das Führungselement das Bandende zielsicher in den Schlossabschnitt einführen kann.

Der definierte Aufnahmebereich dient als "Poka-Yoke"-Vorrichtung (Fehlhandhabungssicherheit), die ein falsches Einlegen des Verbindungselements durch den Bediener konstruktiv verhindert und somit die Prozesssicherheit ohne zusätzliche Sensoren oder Überprüfungen erhöht. Dies reduziert die Anlernzeit für neue Mitarbeiter und steigert die Erstausbeute (First Pass Yield) der Produktion.

Alternativ zur rein passiven, formschlüssigen Aufnahme könnten auch aktive Klemmelemente, beispielsweise kleine, federbelastete oder pneumatische Greifer, oder sogar eine Vakuumansaugung verwendet werden, um das Verbindungselement aktiv zu fixieren, was bei sehr hohen Prozessgeschwindigkeiten Vibrationen entgegenwirken kann.

Gemäß einer bevorzugten Ausführungsform ist vorgesehen, dass der Aufnahmebereich zumindest teil- oder bereichsweise derart komplementär zu dem Basisabschnitt und/oder zu dem Schlossabschnitt ausgeführt ist, dass diese zumindest im Wesentlichen formschlüssig in dem Aufnahmebereich aufnehmbar sind/ist; und/oder dass in einem der zweiten Halterung abgewandten Bereich die erste Halterung einen mit dem Aufnahmebereich verbundenen Kanalabschnitt aufweist, über den eine Bewegung des Halteabschnitts geführt wird.

Ein formschlüssiger, komplementärer Aufnahmebereich gewährleistet die höchstmögliche Stabilität und Positioniergenauigkeit des Verbindungselements, da jegliches Spiel oder Verdrehen unterbunden wird. Der zusätzliche Kanalabschnitt an der ersten Halterung dient als Führung für das Band nach dem Einfädeln und stellt sicher, dass es beim späteren Spannen und Abtrennen nicht verkantet.

Diese Kombination maximiert die mechanische Präzision und Zuverlässigkeit des gesamten Systems.

Die formschlüssige Aufnahme garantiert ferner eine exakte, wiederholgenaue Positionierung im Mikrometerbereich, was für das zuverlässige Treffen der kleinen Einführöffnung des Schlossabschnitts unerlässlich ist. Der Kanalabschnitt erfüllt eine wichtige Funktion nach dem Einfädeln: Er führt das überstehende Bandende kontrolliert ab und verhindert, dass es sich verhakt oder den nächsten automatisierten Schritt, wie das Spannen, stört.

Alternativ zu einem integrierten Kanalabschnitt könnte das Bandende auch durch einen gezielten Luftstoß oder eine separate Abführzange aus dem Arbeitsbereich entfernt werden.

Gemäß Realisierungen der Erfindung ist vorgesehen, dass der Aufnahmebereich derart ausgeführt ist, dass der Basisabschnitt und/oder Schlossabschnitt des Verbindungselements in einer Einsteckrichtung in den Aufnahmebereich einsteckbar ist. Eine definierte Einsteckrichtung vereinfacht und beschleunigt den manuellen Ladevorgang für den Bediener, da die Bewegung intuitiv und unidirektional ist.

Dies reduziert die kognitive Last und die benötigte Zeit pro Ladezyklus, was die Gesamteffizienz der semi-automatischen Station steigert. Zudem wird durch die klare Bewegungsrichtung das Risiko einer Fehlbestückung minimiert.

Die unidirektionale Einsteckbewegung ermöglicht eine extrem schnelle und ergonomische Bestückung durch den Bediener, da sie einer natürlichen "Push-to-seat"-Bewegung folgt, was die Zykluszeit weiter verkürzt.

Diese Einfachheit reduziert die kognitive Belastung und Ermüdung des Bedieners über eine lange Schicht.

Denkbar wäre auch eine alternative Ausgestaltung, bei der das Verbindungselement von oben eingelegt ("Top-Load") und durch eine Abdeckung fixiert wird, was bei bestimmten Stationslayouts vorteilhaft sein könnte.

Gemäß einer bevorzugten Ausführungsform ist vorgesehen, dass die zweite Halterung zwischen einer ersten Stellung, in der sich ein Auslegerbereich im Wesentlichen entgegen der Einsteckrichtung erstreckt, und einer zweiten Stellung, in der sich der Auslegerbereich in Richtung des Aufnahmebereichs erstreckt, verschwenkbar gelagert ist.

Diese definierte Schwenkbewegung zwischen zwei Endstellungen ermöglicht eine klare und wiederholgenaue Umlenkung des flexiblen Halteabschnitts um den Kabelstrang. Die erste Stellung erleichtert das Einlegen des Bandes, während die zweite Stellung das Band präzise für den Einführvorgang positioniert. Diese Kinematik bildet das mechanische Herzstück für die Automatisierung des Umreifungsvorgangs.

Diese präzise definierte Schwenkbewegung zwischen zwei mechanisch definierten Endanschlägen sorgt für höchste Wiederholgenauigkeit des Umreifungsvorgangs. Die erste, geöffnete Stellung schafft maximalen Freiraum für das Einlegen des Bandes, während die zweite, geschlossene Stellung das Bandende exakt vor der Einführöffnung positioniert.

Alternativ zu einer reinen Schwenkbewegung könnte auch eine Kurvenführung mittels einer Kulissensteuerung realisiert werden, die eine komplexere, nichtkreisförmige Bewegung ermöglicht, um beispielsweise um Störkonturen am Kabelstrang herum zu navigieren.

In einer alternativen Weiterentwicklung kann vorgesehen sein, dass die zweite Halterung ausgebildet ist, den flexiblen Halteabschnitt beim Verschwenken in einem Winkel von im Wesentlichen 90 Grad zu biegen; und/oder dass die zweite Halterung einen Führungsbereich aufweist, um einen Bereich des Halteabschnitts formschlüssig aufzunehmen; und/oder dass der Auslegerbereich einen Fensterbereich aufweist, durch den sich das Führungselement erstreckt.

Das Biegen um 90 Grad ist eine besonders effiziente Bewegung, um das Band um den Kabelstrang zu legen und es optimal für die lineare Zuführung durch das Führungselement auszurichten. Ein formschlüssiger Führungsbereich in der zweiten Halterung verhindert ein Verrutschen des Bandes während der schnellen Schwenkbewegung. Der Fensterbereich schafft den notwendigen Bauraum, damit das Führungselement das Bandende erreichen und einführen kann, ohne mit der zweiten Halterung zu kollidieren, was ein kompaktes und integriertes Design ermöglicht.

Die 90-Grad-Biegung stellt auch den kürzesten und schnellsten Weg dar, um das Band um einen typischerweise runden Kabelstrang zu legen und es perfekt für einen linearen Vorschub auszurichten. Der Fensterbereich ist ein cleveres konstruktives Detail, das eine sehr kompakte Bauweise ermöglicht, indem es die Bewegungsräume des Führungselements und der zweiten Halterung überlappen lässt, ohne dass es zu einer Kollision kommt. Eine alternative Ausgestaltung ohne Fensterbereich würde eine längere und auskragendere Bauweise des Führungselements erfordern, was zu Lasten der Stabilität und Präzision gehen könnte.

Gemäß einer bevorzugten Ausführungsform ist vorgesehen, dass die Montagestation in einem Bereich zwischen der ersten und der zweiten Halterung einen kreissegmentförmigen Aufnahmebereich aufweist, der ausgebildet ist, einen Abschnitt des Kabelstrangs aufzunehmen; und/oder dass das Führungselement als Schlittenelement ausgeführt und relativ zu der ersten Halterung linear beweglich ausgebildet ist.

Der kreissegmentförmige Aufnahmebereich für den Kabelstrang stellt sicher, dass dieser während des Umreifens sicher und zentriert positioniert ist, was zu einer gleichmäßigen und mittigen Befestigung führt. Die Ausführung des Führungselements als linear bewegliches Schlittenelement ist eine mechanisch einfache, robuste und kostengünstige Lösung für die Einführbewegung. Diese lineare Bewegung ist zudem sehr präzise und schnell steuerbar.

Der kreissegmentförmige Aufnahmebereich zentriert ferner den Kabelstrang automatisch und sorgt dafür, dass das Verbindungselement exakt mittig auf dem Kabelstrang platziert wird, was für eine professionelle Optik und gleichmäßige Krafteinleitung wichtig ist.

Die Ausführung des Führungselements als einfaches Schlittenelement, das auf einer Standard-Linearführung läuft, ist extrem kostengünstig, robust und wartungsarm, da es auf bewährte Industriekomponenten zurückgreift. Alternativ könnte der Aufnahmebereich für den Kabelstrang als verstellbare V-Aufnahme ausgeführt sein, um ein noch breiteres Spektrum an Kabelbaumdurchmessern abdecken zu können.

Gemäß Realisierungen der Erfindung ist vorgesehen, dass das Führungselement schwenkbeweglich gelagert und ausgebildet ist, in einer reinen Schwenkbewegung oder in einer Superposition aus einer Schwenk- und einer Linearbewegung das freie Ende einzuführen; und/oder dass das Führungselement einen Führungsbereich aufweist, um einen Bereich des Halteabschnitts formschlüssig aufzunehmen.

Eine schwenk- oder superponierte Bewegung des Führungselements kann in baulich engen Verhältnissen vorteilhaft sein und komplexere Bewegungsabläufe ermöglichen, um Hindernissen auszuweichen. Ein eigener formschlüssiger Führungsbereich am Führungselement selbst sorgt dafür, dass das Bandende während der gesamten Einführbewegung sicher gegriffen und geführt wird. Dies erhöht die Prozesssicherheit weiter, insbesondere bei hohen Geschwindigkeiten oder sehr dünnen Bändern.

Die Möglichkeit einer überlagerten Schwenk- und Linearbewegung (Superposition) verleiht dem Führungselement zusätzliche Flexibilität, um das Bandende aktiv in die Öffnung zu "fädeln", anstatt es nur starr hineinzuschieben, was die Prozesssicherheit bei leichten Toleranzabweichungen weiter erhöht. Ein eigener Führungsbereich am Führungselement, der das Bandende greift, agiert wie eine Pinzette und sorgt für eine absolut sichere Führung während der kritischen Einführphase.

Als Alternative zu einem mechanischen Führungsbereich könnte das Bandende auch durch einen gezielten Vakuumstrom am Führungselement gehalten werden.

In einer alternativen Weiterentwicklung kann vorgesehen sein, dass die Montagestation ferner eine Einrichtung zum automatischen Straffen und Abtrennen des Halteabschnitts aufweist; und/oder dass der Schlossabschnitt eine Schnapp- oder Rastverbindung aufweist; und/oder dass die Montagestation eine integrierte Überprüfungseinrichtung aufweist, die detektiert, ob das freie Ende erfolgreich eingeführt ist.

Die Integration von automatischem Spannen und Abtrennen in denselben Zyklus macht einen nachfolgenden Arbeitsschritt überflüssig und maximiert die Zeiteinsparung. Die Überprüfungseinrichtung (z.B. ein optischer Sensor oder ein mechanischer Taster) eliminiert die Notwendigkeit einer separaten, manuellen Qualitätskontrolle und stellt sicher, dass nur korrekt montierte Teile den Prozess verlassen. Dies erhöht die Ausschussrate und die Gesamtqualität der Produktion erheblich.

Die Integration der Spann- und Schneidfunktion sowie der Überprüfung in einen einzigen, nahtlosen Prozesszyklus stellt den maximalen Automatisierungsgrad für eine semi-automatische Station dar und eliminiert jegliche Notwendigkeit für Nacharbeit oder separate Kontrollschritte. Die Überprüfungseinrichtung (z.B. ein Lichtschrankensensor, der das durchgeführte Bandende detektiert, oder eine Kamera) ermöglicht eine 100%-Qualitätskontrolle in Echtzeit und kann die Daten für jeden einzelnen Montagevorgang protokollieren.

Als Alternative zur integrierten Überprüfung könnte die korrekte Spannung auch über eine Drehmoment- oder Stromüberwachung am Antrieb des Spannwerkzeugs sichergestellt werden.

Das erfindungsgemäße Montagesystem, welches mindestens zwei der beschriebenen Montagestationen auf einer Montage-Plattform (z.B. einem Montagetisch) umfasst, ermöglicht die gleichzeitige Montage mehrerer Verbindungselemente an einem Kabelstrang.

Durch eine gemeinsame Steuereinrichtung können die Stationen synchron aktiviert werden, was zu einer massiven Steigerung der Produktivität führt. Ein Bediener kann so mit einer einzigen Aktivierung einen kompletten Kabelstrang an mehreren Punkten gleichzeitig befestigen.

Das erfindungsgemäße Verfahren zum Fertigen eines Kabelbaums umfasst das Bereitstellen eines solchen Montagesystems, das Anordnen eines Kabelstrangs auf der Plattform und das zeitgleiche Aktivieren der Montagestationen. Dies operationalisiert die Vorteile des Systems und ermöglicht eine skalierbare und hocheffiziente Kabelbaumfertigung.

Das erfindungsgemäße Verfahren zum semi-automatischen Montieren, welches die Schritte des Haltens, Verschwenkens und Bewegens des Führungselements automatisiert, definiert den Kernprozess, der die ergonomischen und zeitlichen Vorteile realisiert. Es beschreibt exakt die Abfolge, die den manuellen Einfädelschritt überflüssig macht.

Gemäß einer bevorzugten Ausführungsform des Verfahrens ist vorgesehen, dass dieses ferner die automatisierten Schritte des Straffens des eingeführten Halteabschnitts und des Abtrennens eines überschüssigen Endbereichs aufweist.

Die Aufnahme dieser Schritte in den automatisierten Zyklus vervollständigt den Montageprozess innerhalb eines einzigen, schnellen Arbeitsablaufs. Der Bediener muss nach der Aktivierung keine weiteren manuellen Handlungen mehr vornehmen, was die Zykluszeit minimiert und die Effizienz maximiert. Dies führt zu einem "One-touch"-Prinzip, das sowohl ergonomisch optimal als auch maximal produktiv ist.

Darüber hinaus sind weitere alternative Ausgestaltungen denkbar. Der Aktuator könnte alternativ pneumatisch oder hydraulisch betrieben werden, je nach Anforderungen an Kraft und Geschwindigkeit. Die Steuerung könnte über eine einfache Fußschalterbetätigung oder eine Zweihand-Sicherheitsbedienung erfolgen. Sensoren könnten nicht nur die erfolgreiche Einführung, sondern auch die korrekte Anwesenheit von Kabelstrang und Verbindungselement vor der Aktivierung prüfen, um Fehlzyklen zu verhindern.

Die gesamte Station könnte modular aufgebaut sein, um einen schnellen Wechsel von Aufnahmen für unterschiedliche Typen von Verbindungselementen zu ermöglichen.

Die Erfindung stellt somit eine semi-automatische Montagestation vor, die eine zentrale Herausforderung in der Fertigung von Kabelbäumen löst: das zeitaufwändige und ergonomisch belastende manuelle Montieren von Kabelbindern. Anstatt wie bisherige Werkzeuge nur das Spannen und Abschneiden zu automatisieren, zielt die Erfindung auf den kritischsten Schritt ab - das Einführen des flexiblen Bandendes in den Verschlusskopf. Dadurch schließt die Montagestation die Lücke zwischen einfachen Handwerkzeugen und hochinvestiven, vollautomatischen Roboteranlagen und bietet eine wirtschaftlich attraktive Lösung zur signifikanten Steigerung von Effizienz und Arbeitsplatzqualität.

Das technische Herzstück der Vorrichtung ist ein präzise aufeinander abgestimmtes mechanisches System aus drei Hauptkomponenten. Eine feste Aufnahme fixiert den Basis- und Schlossabschnitt des Kabelbinders unverrückbar und stellt eine exakte Zielposition sicher. Ein schwenkbarer Arm, der das flexible Bandende hält, legt dieses in einer schnellen und wiederholgenauen Bewegung um den positionierten Kabelstrang. Anschließend vollendet ein linear beweglicher Schieber den Vorgang, indem er das ausgerichtete Bandende kraftvoll und zielsicher in die Einführöffnung des Schlossabschnitts drückt und so die Verbindung schließt. Dieses robuste Zusammenspiel garantiert eine prozesssichere Montage, die von menschlicher Geschicklichkeit unabhängig ist.

Für den Bediener ergibt sich ein maximal vereinfachter und ergonomischer Arbeitsablauf. Der Prozess beschränkt sich auf das simple Einlegen des Verbindungselements und des Kabelstrangs in klar definierte Aufnahmen und die anschließende Aktivierung des automatisierten Zyklus, beispielsweise über einen Fußschalter.

Die aufwändige und repetitive Fummelarbeit des manuellen Einfädelns entfällt komplett. Dies führt nicht nur zu einer drastischen Reduzierung der Zykluszeit, sondern minimiert auch das Risiko von Zwangshaltungen und repetitiven Belastungsverletzungen (RSI-Syndrom), was die Gesundheit und Zufriedenheit der Mitarbeiter nachhaltig verbessert.

Über die Kernfunktion hinaus integriert die Montagestation weitere automatisierte Prozessschritte zu einem nahtlosen Gesamtablauf. Nach dem erfolgreichen Einführen des Bandes kann die Vorrichtung den Kabelbinder automatisch auf eine vordefinierte Zugkraft spannen und das überstehende Ende bündig abtrennen. Ein wesentlicher Vorteil liegt zudem in der optionalen Integration einer Überprüfungseinrichtung.

Diese kann beispielsweise durch einen optischen Sensor oder einen Mikrotaster in Echtzeit detektieren, ob das Band korrekt eingeführt wurde, und eliminiert somit die Notwendigkeit einer separaten, nachgelagerten Qualitätskontrolle. Das Resultat ist ein "First Time Right"-Ansatz, der Ausschuss reduziert und eine 100%-ige Prozesskontrolle direkt am Arbeitsplatz ermöglicht.

Die Erfindung ist zudem als skalierbares System konzipiert, um den Anforderungen der Massenfertigung gerecht zu werden. Mehrere der beschriebenen Montagestationen können auf einer größeren Montageplattform oder einem Montagetisch angeordnet werden.

Durch eine gemeinsame Steuerung lassen sich alle Stationen synchron aktivieren, sodass ein Bediener mit einer einzigen Aktion einen Kabelbaum an zahlreichen Punkten gleichzeitig mit Verbindungselementen bestücken kann. Dies multipliziert den Produktivitätsgewinn und ist ideal für die Bestückung komplexer Kabelbretter, auf denen lange Kabelstränge mit vielen Befestigungspunkten gefertigt werden.

Ein weiterer entscheidender Vorteil der Konstruktion ist ihre Flexibilität und Anpassungsfähigkeit. Die Aufnahmen für das Verbindungselement und den Kabelstrang können als modulare und leicht austauschbare Formnester gestaltet werden. Dies ermöglicht es, die Montagestation mit minimalem Aufwand und geringen Kosten an unterschiedliche Größen und Typen von Kabelbindern oder variierende Kabelbaumdurchmesser anzupassen. Anstatt für jede neue Variante eine komplett neue Vorrichtung bauen zu müssen, genügt der Austausch kleinerer Komponenten, was die Investitionssicherheit erhöht und das System zukunftsfähig macht.

### A. KURZBESCHREIBUNG DER ZEICHNUNGEN

Die Erfindung lässt sich anhand der folgenden Zeichnungen und der Beschreibung besser verstehen. Die Komponenten in den Figuren sind nicht notwendigerweise maßstabsgetreu, wobei der Schwerpunkt stattdessen auf der Veranschaulichung verschiedener bevorzugter Ausführungsformen der Erfindung liegt.
- FIG. 1: zeigt schematisch und in einer isometrischen Ansicht eine exemplarische Ausführungsform der erfindungsgemäßen Montagestation in einem Zustand, in welchem ein zu montierendes Verbindungselement der Montagestation zugeführt wird.
- FIG. 2: zeigt schematisch und in einer isometrischen Ansicht die Montagestation aus FIG. 1 in einem Zustand, in welchem das Verbindungselement in die erste und zweite Halterung der Montagestation eingesetzt ist.
- FIG. 3: zeigt schematisch und in einer isometrischen Ansicht die Montagestation aus den vorhergehenden Figuren in einem Zustand, in welchem die zweite Halterung mit dem von ihr gehaltenen Bereich des Verbindungselements verschwenkt wurde, um dessen freies Ende auszurichten.
- FIG. 4: zeigt schematisch und in einer isometrischen Ansicht die Montagestation in einem Zustand, in welchem das Führungselement bewegt wurde, um das freie Ende des Halteabschnitts des Verbindungselements in den Schlossabschnitt einzuführen.

Die in den Zeichnungen schematisch gezeigte exemplarische Ausführungsform der erfindungsgemäßen Montagestation 1 ist Teil eines in den Zeichnungen nicht dargestellten Montagesystems zum Fertigen eines Kabelbaums für ein Fahrzeug. Ein solches Montagesystem weist typischerweise eine Montage-Plattform, beispielsweise in Gestalt eines Montage-Tisches, auf, auf der mindestens zwei, vorzugsweise mehrere der hier gezeigten Montagestationen 1 angeordnet sind.

Die Montage-Plattform ist dabei derart ausgeführt, dass ein Kabelstrang gemäß einem vordefinierten Muster aufgelegt werden kann, wobei die Montagestationen 1 so positioniert sind, dass sie an den vorgesehenen Stellen jeweils ein Verbindungselement 20 an dem Kabelstrang montieren können. Das Montagesystem ist vorzugsweise ausgebildet, alle Montagestationen 1 zeitgleich und synchron anzusteuern, um eine hocheffiziente Fertigung zu ermöglichen.

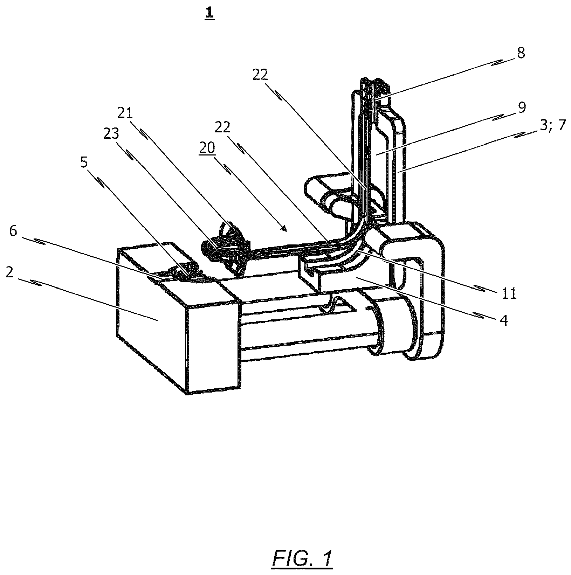

Jedes zu montierende Verbindungselement 20, wie es in FIG. 1 dargestellt ist, weist einen Basisabschnitt 21, einen davon ausgehenden flexiblen Halteabschnitt 22 mit einem freien Ende, und einen am oder im Bereich des Basisabschnitts 21 ausgebildeten Schlossabschnitt 23 auf. Der Schlossabschnitt 23 besitzt eine nicht explizit gezeigte Einführöffnung, durch welche das freie Ende des Halteabschnitts 22 einführbar ist, um eine Schlaufe zur Umschlingung eines Kabelstrangs zu bilden. Innerhalb des Schlossabschnitts 23 ist eine Rast- oder Klemmverbindung vorgesehen, die ein Zurückziehen des eingeführten Halteabschnitts 22 verhindert.

FIG. 1 zeigt die Montagestation 1 in einem initialen Ladezustand. Die Montagestation 1 weist eine erste, stationäre Halterung 2 und eine zweite, relativ dazu bewegliche Halterung 3 auf. Die erste Halterung 2 dient der präzisen und unverrückbaren Aufnahme des Basisabschnitts 21 und des Schlossabschnitts 23 des Verbindungselements 20. Hierzu ist ein Aufnahmebereich 5 vorgesehen, der vorteilhafterweise formschlüssig und komplementär zur Geometrie des Schlossabschnitts 23 gestaltet ist.

Dies hat den Vorteil, dass das Verbindungselement 20 ohne jegliches Spiel positioniert wird, was eine Grundvoraussetzung für die nachfolgende prozesssichere, automatisierte Einführung des Halteabschnitts 22 ist. Die formschlüssige Aufnahme wirkt dabei als Poka-Yoke-System, das ein falsches Einlegen durch den Bediener konstruktiv verhindert. An die erste Halterung 2 schließt sich ein Kanalabschnitt 6 an, dessen vorteilhafte Funktion im späteren Prozessverlauf liegt, indem er das überstehende Ende des Halteabschnitts 22 nach dem Spannen kontrolliert abführt.

Die zweite Halterung 3 ist in dieser Darstellung in einer ersten, offenen Stellung gezeigt, in der sie bereit ist, den flexiblen Halteabschnitt 22 aufzunehmen. Die zweite Halterung 3 ist als schwenkbarer Auslegerbereich 7 ausgeführt, der einen Führungsbereich 8 in Form eines Kanals oder einer Nut aufweist. Dieser Führungsbereich 8 nimmt einen Teil des Halteabschnitts 22 auf und hält ihn während der schnellen Schwenkbewegung sicher fest.

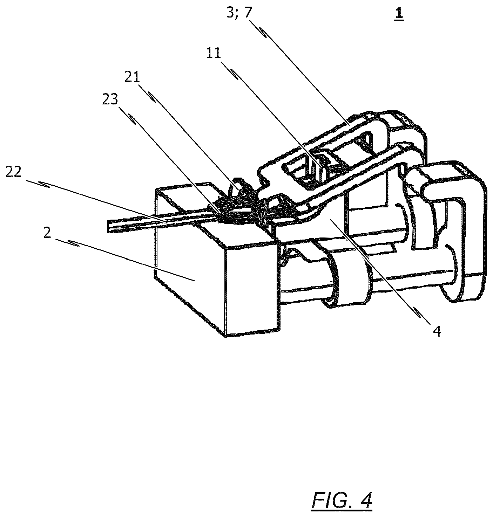

Ebenfalls sichtbar ist ein Fensterbereich 9 im Auslegerbereich 7, dessen Funktion in Verbindung mit FIG. 4 deutlich wird. Des Weiteren ist ein linear bewegliches Führungselement 4 erkennbar, das in dieser Phase noch in seiner zurückgezogenen Position verharrt. Das Führungselement 4 weist ebenfalls einen Führungsbereich 11 auf, der dazu dient, das freie Ende des Halteabschnitts 22 zu greifen und zu führen.

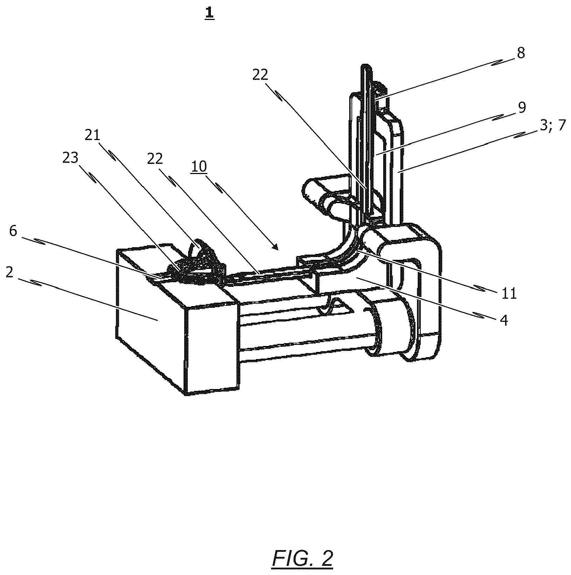

FIG. 2 zeigt die Montagestation 1, nachdem ein Verbindungselement 20 vollständig eingesetzt wurde. Der Schlossabschnitt 23 ruht nun sicher im Aufnahmebereich 5 der ersten Halterung 2. Der flexible Halteabschnitt 22 ist in den Führungsbereich 8 der zweiten Halterung 3 eingelegt. Zwischen der ersten Halterung 2 und der zweiten Halterung 3 ist ein kreissegmentförmiger Aufnahmebereich 10 angedeutet.

Dieser Bereich dient zur Aufnahme eines in den Zeichnungen nicht dargestellten Kabelstrangs. Die Formgebung hat den Vorteil, dass der Kabelstrang automatisch zentriert und sicher gehalten wird, um eine mittige und gleichmäßige Umschlingung durch den Halteabschnitt 22 zu gewährleisten. Die Montagestation 1 ist nun bestückt und bereit für die Aktivierung des automatisierten Montagezyklus.

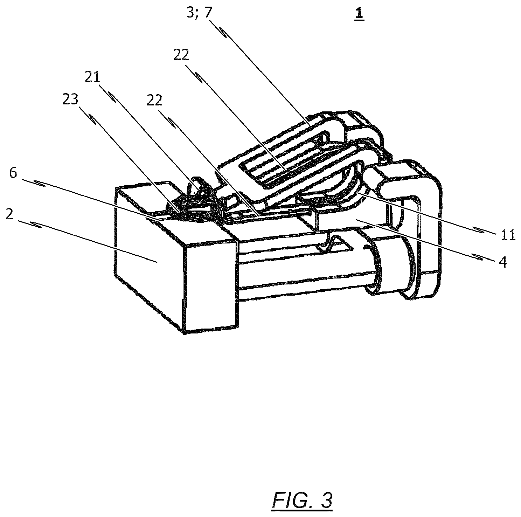

FIG. 3 veranschaulicht den ersten automatisierten Schritt nach der Aktivierung. Die zweite Halterung 3 wurde aus ihrer ersten Stellung (siehe FIG. 2) in eine zweite, geschlossene Stellung verschwenkt. Durch diese Schwenkbewegung, die vorzugsweise um etwa 90 Grad erfolgt, wird der flexible Halteabschnitt 22 um den im Aufnahmebereich 10 liegenden Kabelstrang gebogen. Das freie Ende des Halteabschnitts 22 ist nun exakt auf die Einführöffnung des Schlossabschnitts 23 ausgerichtet, der von der ersten Halterung 2 gehalten wird.

Dieser Schritt ist der entscheidende Vorteil der Erfindung, da er das schwierige manuelle Umschlingen und Ausrichten vollständig automatisiert, was zu einer enormen Zeitersparnis und ergonomischen Entlastung des Bedieners führt. Die Bewegung ist schnell, präzise und wiederholgenau.

FIG. 4 zeigt den nachfolgenden automatisierten Schritt, das Einführen des Bandendes. Das Führungselement 4, das als Schlittenelement ausgeführt ist, wird linear in Richtung der ersten Halterung 2 bewegt. Der Führungsbereich 11 des Führungselements 4 erfasst dabei das freie Ende des Halteabschnitts 22 und schiebt es durch die Einführöffnung in den Schlossabschnitt 23. Bei dieser Bewegung erstreckt sich das Führungselement 4 durch den Fensterbereich 9 der zweiten Halterung 3, was eine kollisionsfreie und sehr kompakte Bauweise der gesamten Anordnung ermöglicht. Sobald das Band im Schlossabschnitt 23 eingerastet ist, ist die Schlaufe geschlossen.

Obwohl in den Figuren nicht dargestellt, schließt sich an diesen Zustand typischerweise das automatische Spannen des Halteabschnitts 22 auf eine definierte Zugkraft und das bündige Abtrennen des überstehenden Endes an.

Ferner kann eine, ebenfalls nicht gezeigte, integrierte Überprüfungseinrichtung, wie ein optischer Sensor, detektieren, ob das Ende des Halteabschnitts 22 den Schlossabschnitt 23 erfolgreich passiert hat, um eine 100%-ige Qualitätskontrolle in Echtzeit zu gewährleisten. Die gesamte Abfolge von Schritten, die in den Figuren 2 bis 4 gezeigt sind, läuft in einem einzigen, schnellen und vollautomatisierten Zyklus ab, nachdem der Bediener die Station aktiviert hat. Die Erfindung ist nicht auf die in den Zeichnungen gezeigte exemplarische Ausführungsform beschränkt, sondern ergibt sich aus einer Zusammenschau sämtlicher hierin offenbarter Merkmale.

Insbesondere ist es in diesem Zusammenhang denkbar, dass die Montagestation 1 ferner eine Einrichtung zum automatischen Straffen des Halteabschnitts 22 des Verbindungselements 20 in dessen in dem Schlossabschnitt 23 des Verbindungselements 20 zumindest teil- oder bereichsweise aufgenommenen Zustand und zum automatischen Abtrennen eines durch den Schlossabschnitt 23 des Verbindungselements 20 hindurchgeführten Endbereichs des gestrafften Halteabschnitts 22 des Verbindungselements 20 aufweist.

### Bezugszeichenliste

- 1: Montagestation
- 2: erste Halterung
- 3: zweite Halterung
- 4: Führungselement
- 5: Aufnahmebereich der ersten Halterung
- 6: Kanalabschnitt der ersten Halterung
- 7: Auslegerbereich der zweiten Halterung
- 8: Führungsbereich der zweiten Halterung/des Auslegerbereichs der zweiten Halterung
- 9: Fensterbereich des Auslegerbereichs der zweiten Halterung
- 10: Aufnahmebereich zwischen der ersten und zweiten Halterung
- 11: Führungsbereich des Führungselements

- 20: Verbindungselement
- 21: Basisabschnitt des Verbindungselements
- 22: flexibler Halteabschnitt des Verbindungselements
- 23: Schlossabschnitt des Verbindungselements

## Patentansprüche

1. Montagestation (1) eines Montagesystems zum Fertigen eines Kabelbaums für ein Fahrzeug, bei welchem eine Bündelung einzelner Leitungen zur Signal- und/oder Arbeitsstrom-Übertragung als Kabelstrang geführt und durch Verbindungselemente (20) zusammengehalten werden, wobei jedes Verbindungselement (20) einen Basisabschnitt (21) insbesondere zur Montage an einem Fahrzeugteil, einen flexiblen Halteabschnitt (22) mit einem freien Ende und einem gegenüberliegenden, mit dem Basisabschnitt (21) verbundenen Ende und einen am oder beim Basisabschnitt (21) ausgebildeten Schlossabschnitt (23) mit einer Einführöffnung aufweist, über welche der Halteabschnitt (22) über sein freies Ende dem Schlossabschnitt (23) zuführbar ist, wobei die Montagestation (1) ausgebildet ist, in einer automatisierten Weise und vorzugsweise in einer voll-automatisierten Weise ein Verbindungselement (20) an dem Kabelstrang zu montieren, und zwar indem der flexible Halteabschnitt (22) des Verbindungselements (20) zumindest teil- oder bereichsweise um den Kabelstrang gelegt und das freie Ende des Halteabschnitts (22) des Verbindungselements (20) über die Einführöffnung des Schlossabschnitts (23) in den Schlossabschnitt (23) des Verbindungselements (20) eingeführt wird.

2. Montagestation (1) nach Anspruch 1,
wobei die Montagestation (1) ausgebildet ist, in einer synchronisierten Weise, sequenziell und gemäß einem vorab festgelegten oder festlegbaren Ereignisablauf und in einer automatisierten Weise zunächst den Halteabschnitt (22) des Verbindungselements (20) um den Kabelstrang herumzulegen und anschließend das freie Ende des Halteabschnitts (22) des Verbindungselements (20) über die Einführöffnung des Schlossabschnitts (23) in den Schlossabschnitt (23) des Verbindungselements (20) einzuführen und durch den Schlossabschnitt (23) zu führen; und /oder
wobei der Montagestation (1) mindestens ein Aktuator, insbesondere ein elektromagnetischer Aktuator, zugeordnet ist zum bedarfsweisen Antreiben der für die Montage des Verbindungselements (20) an dem Kabelstrang notwendigen und antreibbaren mechanischen Komponenten der Montagestation (1).

3. Montagestation (1) nach Anspruch 1 oder 2, wobei die Montagestation (1) Folgendes aufweist:
- eine erste Halterung (2) zum bedarfsweisen Halten des Basisabschnitts (21) und/oder des Schlossabschnitts (23) eines an dem Kabelstrang zu montierende Verbindungselements (20); und
- eine zweite Halterung (3) zum bedarfsweisen Halten zumindest eines Bereiches des flexiblen Halteabschnitts (22) des an dem Kabelstrangs zu montierenden Verbindungselements (20),
wobei die zweite Halterung (3) derart verschwenkbar ausgeführt ist, dass der von der zweiten Halterung (3) bedarfsweise gehaltene Bereich des flexiblen Halteabschnitts (22) des Verbindungselements (20) so umgelenkt wird oder umlenkbar ist, dass das freie Ende des Halteabschnitts (22) des Verbindungselements (20) in Richtung der Einfuhröffnung des von der ersten Halterung (2) bedarfsweise gehaltenen Schlossabschnitts (23) des Verbindungselements (20) zeigt oder ausgerichtet ist, und wobei die Montagestation (1) ferner Folgendes aufweist:
- ein Führungselement (4), welches relativ zu der ersten Halterung (2) bewegbar und ausgebildet ist, das freie Ende des umgelegten Halteabschnitts (22) des Verbindungselements (20) durch die Einführöffnung in den Schlossabschnitt (23) des Verbindungselements (20) einzuführen.

4. Montagestation (1) nach Anspruch 3,
wobei die erste Halterung (2) einen Aufnahmebereich (5) aufweist, in oder von welchem zumindest teil- oder bereichsweise der Basisabschnitt (21) und/oder der Schlossabschnitt (23) des zu montierenden Verbindungselements (20) aufnehmbar ist oder gehalten wird.

5. Montagestation (1) nach Anspruch 4,
wobei der Aufnahmebereich (5) zumindest teil- oder bereichsweise derart komplementär zu dem Basisabschnitt (21) und/oder zu dem Schlossabschnitt (23) des Verbindungselements (20) ausgeführt ist, dass der Basisabschnitt (21) und/oder der Schlossabschnitt (23) des Verbindungselements (20) zumindest im Wesentlichen formschlüssig in dem Aufnahmebereich (5) aufnehmbar sind/ist; und/oder
wobei in einem der zweiten Halterung (3) abgewandten Bereich die erste Halterung (2) einen mit dem Aufnahmebereich (5) verbundenen Kanalabschnitt (6) aufweist, über den eine Bewegung des Halteabschnitts (22) des Verbindungselements (20) geführt wird oder führbar ist, wenn das freie Ende des umgelenkten Halteabschnitts (22) des Verbindungselements (20) durch den Schlossabschnitt (23) des Verbindungselements (20) geführt wird.

6. Montagestation (1) nach Anspruch 4 oder 5,
wobei der Aufnahmebereich (5) derart ausgeführt ist, dass der Basisabschnitt (21) und/oder Schlossabschnitt (23) des Verbindungselements (20) in einer Einsteckrichtung in den Aufnahmebereich (5) einsteckbar ist.

7. Montagestation (1) nach Anspruch 6,
wobei die zweite Halterung (3) zwischen einer ersten Stellung und einer zweiten Stellung relativ zu der ersten Halterung (2) verschwenkbar gelagert ist, wobei sich in der ersten Stellung der zweiten Halterung (3) zumindest ein Auslegerbereich (7) der zweiten Halterung (3) in eine zumindest im Wesentlichen entgegen der Einsteckrichtung zeigende Richtung erstreckt, und wobei sich in der zweiten Stellung der zweiten Halterung (3) der Auslegerbereich (7) der zweiten Halterung (3) in Richtung des Aufnahmebereichs (5) der ersten Halterung (2) erstreckt.

8. Montagestation (1) nach Anspruch 7,
wobei die zweite Halterung (3) ausgebildet ist, den flexiblen Halteabschnitt (22) beim Verschwenken von der ersten in die zweite Stellung in einem Winkel von im Wesentlichen 90 Grad zu biegen; und/oder
wobei die zweite Halterung (3) und insbesondere der Auslegerbereich (7) der zweiten Halterung (3) einen Führungsbereich (8), vorzugsweise in Gestalt eines Kanalabschnitts, aufweist, welcher ausgebildet ist, zumindest einen Bereich des Halteabschnitts (22) des Verbindungselements (20) insbesondere in einer formschlüssigen Weise aufzunehmen und/oder zu führen; und/oder
wobei der Auslegerbereich (7) der zweiten Halterung (3) einen Fensterbereich (9) aufweist, durch den sich in der zweiten Stellung der zweiten Halterung (3) das Führungselement (4) zumindest teil- oder bereichsweise erstreckt, und zwar zumindest dann, wenn zum Einführen des freien Endes des Halteabschnitts (22) in den Schlossabschnitt (23) des Verbindungselements (20) das Führungselement (4) relativ zu der ersten Halterung (2) bewegt wird.

9. Montagestation (1) nach einem der Ansprüche 3 bis 8,
wobei die Montagestation (1) in einem Bereich zwischen der ersten Halterung (2) und der zweiten Halterung (3) einen insbesondere zumindest im Wesentlichen kreissegmentförmigen Aufnahmebereich (10) aufweist, welcher ausgebildet ist, zumindest teil- oder bereichsweise einen Abschnitt des Kabelstrangs aufzunehmen, wobei beim Aufnehmen des Kabelstrangabschnitts ein insbesondere mittiger Bereich des Halteabschnitts (22) des Verbindungselements (20) zwischen dem Aufnahmebereich (5) und dem Kabelstrangabschnitt angeordnet ist; und/oder
wobei das Führungselement (4) als Schlittenelement ausgeführt und relativ zu der ersten Halterung (2) linear beweglich ausgebildet ist.

10. Montagestation (1) nach einem der Ansprüche 3 bis 9,
wobei das Führungselement (4) schwenkbeweglich gelagert und ausgebildet ist, in einer reinen Schwenkbewegung oder in einer Superposition aus einer Schwenkbewegung und einer Linearbewegung das freie Ende des umgelenkten Halteabschnitts (22) des Verbindungselements (20) durch die Einführöffnung in den Schlossabschnitt (23) des Verbindungselements (20) einzuführen; und/oder
wobei das Führungselement (4) einen Führungsbereich (11), vorzugsweise in Gestalt eines Kanalabschnitts, aufweist, welcher ausgebildet ist, zumindest einen Bereich des Halteabschnitts (22) des Verbindungselements (20) insbesondere in einer formschlüssigen Weise aufzunehmen und/oder zu führen, und zwar insbesondere dann, wenn das Führungselement (4) relativ zu der ersten Halterung (2) bewegt wird.

11. Montagestation (1) nach einem der Ansprüche 1 bis 10,
wobei die Montagestation (1) ferner eine Einrichtung zum automatischen Straffen des Halteabschnitts (22) des Verbindungselements (20) in dessen in dem Schlossabschnitt (23) des Verbindungselements (20) zumindest teil- oder bereichsweise aufgenommenen Zustand und zum automatischen Abtrennen eines durch den Schlossabschnitt (23) des Verbindungselements (20) hindurchgeführten Endbereichs des gestrafften Halteabschnitts (22) des Verbindungselements (20) aufweist; und/oder
wobei der Schlossabschnitt (23) des Verbindungselements (20) derart ausgebildet ist, dass in einem in den Schlossabschnitt (23) des Verbindungselements (20) eingeführten Zustand zumindest eines Bereichs des Halteabschnitts (22) dieser dort über wenigstens eine Schnapp- oder Rastverbindung gehalten wird; und/oder
wobei die Montagestation (1) ferner eine integrierte Überprüfungseinrichtung aufweist, die dazu ausgebildet ist, zu detektieren, ob das freie Ende des Halteabschnitts (22) erfolgreich in den Schlossabschnitt (23) eingeführt ist.

12. Montagesystem zum Fertigen eines Kabelbaums für ein Fahrzeug, wobei das Montagesystem folgendes aufweist:
- eine Montage-Plattform, insbesondere in Gestalt eines Montage-Tisches; und
- mindestens zwei auf der Montage-Plattform angeordnete Montagestationen (1) nach einem der Ansprüche 1 bis 17, wobei die Montage-Plattform derart ausgeführt ist und dazu dient, dass ein Kabelstrang insbesondere gemäß einem vorher festgelegten oder festlegbaren Muster von der Montage-Plattform aufgenommen wird oder aufnehmbar ist, wobei die Montagestationen (1) derart auf der Montage-Plattform angeordnet und ausgebildet sind, jeweils ein Verbindungselement (20) an einem Bereich des von der Montage-Plattform aufgenommenen Kabelstrangs zu montieren, und wobei das Montagesystem ausgebildet ist, zeitgleich und in einer synchronen Weise die Montagestationen (1) anzusteuern und zu aktivieren, wobei zum zeitgleichen und synchronen Aktivieren der mechanischen Komponenten der Montagestationen (1) den Montagestationen (1) des Montagesystems vorzugsweise eine gemeinsame Steuereinrichtung und/oder vorzugsweise ein gemeinsamer Aktuator zugeordnet ist.

13. Verfahren zum Fertigen eines Kabelbaums für ein Fahrzeug, wobei das Verfahren folgende Verfahrensschritte aufweist:
- Bereitstellen eines Montagesystems nach Anspruch 12;
- Anordnen eines Kabelstrangs auf der Montage-Plattform des Montagesystems; und
- zeitgleiches Aktivieren der mechanischen Komponenten der Montagestationen (1) des Montagesystems.

14. Verfahren zum semi-automatischen Montieren eines Verbindungselements (20) an einem Kabelstrang mittels einer Montagestation (1), wobei das Verbindungselement (20) einen Basisabschnitt (21) mit einem Schlossabschnitt (23) und einen flexiblen Halteabschnitt (22) mit einem freien Ende aufweist, wobei das Verfahren die folgenden automatisierten Schritte aufweist:
- Halten des Basisabschnitts (21) und des Schlossabschnitts (23) des Verbindungselements (20) in einer ersten Halterung (2);
- Halten eines Bereichs des flexiblen Halteabschnitts (22) in einer zweiten, verschwenkbaren Halterung (3);
- Verschwenken der zweiten Halterung (3) relativ zur ersten Halterung (2), um den flexiblen Halteabschnitt (22) um einen auf der Montagestation (1) angeordneten Kabelstrang zu legen, sodass das freie Ende des Halteabschnitts (22) in Richtung einer Einführöffnung des Schlossabschnitts (23) ausgerichtet ist; und
- Bewegen eines Führungselements (4) relativ zur ersten Halterung (2), um das freie Ende des Halteabschnitts (22) durch die Einführöffnung in den Schlossabschnitt (23) einzuführen.

15. Verfahren nach Anspruch 14, ferner die folgenden automatisierten Schritte aufweisend:
- Straffen des in den Schlossabschnitt (23) eingeführten Halteabschnitts (22); und
- Abtrennen eines überschüssigen Endbereichs des gestrafften Halteabschnitts (22).
